# EUROPEAN PATENT APPLICATION

(11) **EP 4 760 907 A1**
(43) Date of publication of application: **17.06.2026**
(21) Application number: 25223329.1
(22) Date of filing: 15.12.2025
(51) Int. Cl.: H01M 50/204, H01M 50/249, H01M 50/342, H01M 50/367, H01M 50/244

(54) **BRACKET, BATTERY PACK, AND POWER-CONSUMING EQUIPMENT**

(30) Priority: 13.12.2024 CN 202423093218 U; 17.02.2025 WO PCT/CN2025/077651
(71) Applicant: Eve Energy Co., Ltd., Huizhou, Guangdong 516006 (CN)
(72) Inventor: ZHANG, Jun, Huizhou, 516006 (CN); QIU, Wencong, Huizhou, 516006 (CN)
(74) Representative: Studio Torta S.p.A.

(57) **Abstract**

A bracket and a battery pack are provided. The bracket includes a substrate (110). A side of the substrate (100) away from a battery cell (200) is provided with multiple grooves. A side of the substrate (100) adjacent to the battery cell (200) is provided with multiple bosses (110) corresponding to the grooves. A top of each of the bosses (110) is configured to support a corresponding one of the battery cells (200) to form a channel (190) between at least a portion of a bottom of the battery cell (200) and the substrate (100). A bottom of the boss (110) is provided with a first pressure relief slot (120). The first pressure relief slot (120) is configured to communicate with the battery cell (200) when the battery cell (200) undergoes thermal runaway to relieve pressure in the battery cell (200).

## Description

### Technical Field

The present application relates to a field of batteries, and more specifically, to a bracket, a battery pack, and a power-consuming equipment.

### Related Art

In related technologies, to ensure battery safety under abnormal conditions, battery cells are typically equipped with an explosion-proof valve structure. To safeguard the battery system, the bracket structure supporting the battery cells usually includes pressure relief holes positioned opposite the battery cell's explosion-proof valve. When the internal gas pressure of the battery cell becomes excessive, the explosion-proof valve structure activates, releasing the internal gas through the pressure relief holes. This reduces the risk of damage to the battery system due to excessive pressure. Moreover, during the battery cell assembly process, foam is commonly utilized to secure the battery cells. To prevent the foam from entering and clogging the pressure relief holes, it is essential to perform a sealing operation that isolates the foam from the pressure relief holes.

### SUMMARY

The sealing process is relatively complex and carries the risk of inadequate sealing.

Accordingly, the present application adopts the following technical solution.

In a first aspect, an embodiment of the present application provides a bracket, for installing a plurality of battery cells, including: a substrate, wherein a side of the substrate away from the battery cells is provided with a plurality of grooves, and a side of the substrate adjacent to the battery cells is provided with a plurality of bosses corresponding to the grooves respectively, a top of each of the bosses being configured to support a corresponding one of the battery cells to form a channel between at least a portion of a bottom of the battery cell and the substrate, the channel being configured to accommodate a bonding medium to secure the battery cell to the bracket; wherein a bottom of the boss is provided with a first pressure relief slot configured to communicate with the battery cell when the battery cell undergoes thermal runaway to relieve pressure of the battery cell.

In a second aspect, an embodiment of the present application provides a battery pack. The battery pack includes at least one battery and the bracket in the first aspect.

In a third aspect, an embodiment of the present application provides a power-consuming equipment. The power-consuming equipment includes the battery pack mentioned in the second aspect.

### Advantageous Effects

The bracket provided in the present application includes a substrate with multiple grooves on the side away from the battery cells and corresponding bosses on the side facing the battery cells. The top of each boss supports a corresponding battery cell, creating a channel between the bottom of the battery cell and the substrate. This channel accommodates a bonding medium to secure the battery cell to the bracket. The bottom of each boss features a first pressure relief slot designed to connect with the interior of the battery cell in case of thermal runaway, allowing for pressure release. Since the substrate in this design lacks pressure relief holes, the sealing process and related operations are eliminated, improving cell assembly efficiency. Furthermore, the bonding medium flows smoothly within the channel formed between the bottom of the battery cell and the substrate. The bonding medium gradually spreads to cover the entire channel area, ensuring full contact with both the battery cell and the bracket. This improves the fixation stability of the battery cell.

The battery pack provided in this application possesses all the advantages of the aforementioned bracket.

The power-consuming equipment provided in this application has all the advantages of the aforementioned battery pack.

### BRIEF DESCRIPTION OF THE DRAWINGS

FIG. 1 is a schematic structural view of a bracket according to one embodiment of the present application.
FIG. 2 is a schematic structural view of the bracket and a battery cell according to one embodiment of the present application.
FIG. 3 is a top view of the bracket and the battery cell in FIG. 2.
FIG. 4 is a cross-sectional view of FIG. 3.
FIG. 5 is an enlarged view of portion A in FIG. 4.
FIG. 6 is a schematic structural view of the bracket in FIG. 1 from another viewing angle.
FIG. 7 is an enlarged view of portion B in FIG. 6.
FIG. 8 is a schematic structural view of a part of the bracket in FIG. 5.
FIG. 9 is a schematic structural view of a battery pack according to one embodiment of the present application.
FIG. 10 is a top view of the battery pack in FIG. 9.
FIG. 11 is a cross-sectional view of the battery pack in FIG. 10.
FIG. 12 is an enlarged view of portion C in FIG. 11.

Description of Reference Symbols in the Drawings:
100: Substrate; 110: Boss; 120: First pressure relief slot; 130: First groove; 160: Bottom plate; 170: Second pressure relief slot; 180: Second groove; 190: Channel; 200: Battery cell; 300: Battery pack.

### DETAILED DESCRIPTION

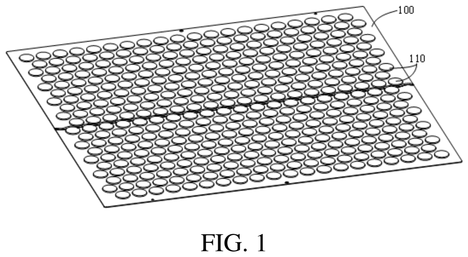

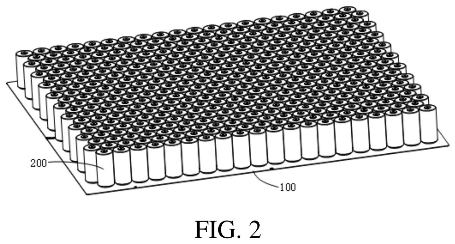

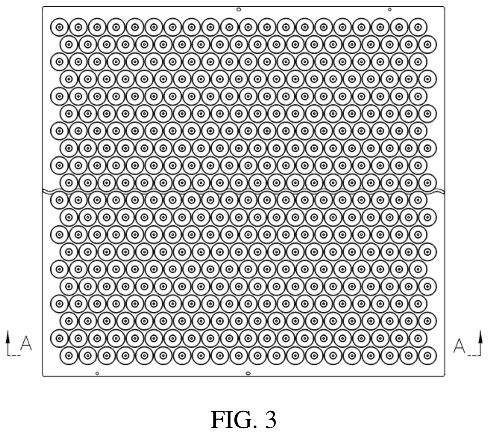

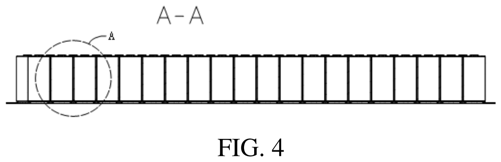

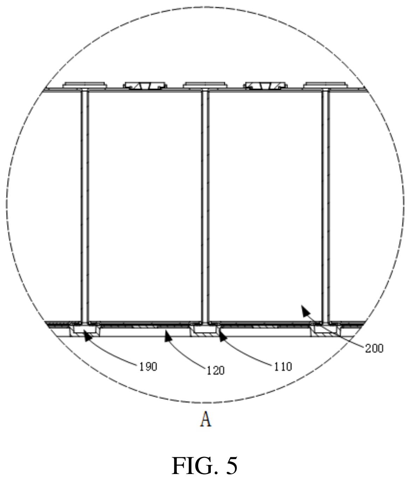

To address the complexity of the sealing process in related technologies and the risk of inadequate sealing, this application provides a bracket for installing multiple battery cells 200. Please refer to FIGs. 1 to 5. FIG. 1 is a schematic structural view of a bracket according to one embodiment of the present application. FIG. 2 is a schematic structural view of the bracket and a battery cell according to one embodiment of the present application. FIG. 3 is a top view of the bracket and the battery cell in FIG. 2. FIG. 4 is a cross-sectional view of FIG. 3. FIG. 5 is an enlarged view of portion A in FIG. 4. The bracket includes a substrate 100. The substrate 100 includes a plurality of grooves on a side away from the battery cells 200 and a plurality of corresponding bosses 110 on a side adjacent to the battery cells 200. A top of each boss 110 is configured to support a bottom of the corresponding battery cell 200, creating a channel 190 between at least part of a bottom of the battery cell 200 and the substrate 100. The channel 190 is configured to accommodate a bonding medium that secures the battery cell 200 to the bracket. A bottom of the boss 110 is provided with a first pressure relief slot 120. The first pressure relief slot 120 is configured to connect to the interior of the battery cell 200 when the battery cell 200 is in a thermal runaway state, allowing the internal gas of the battery cell 200 to be discharged in a timely manner to achieve a pressure relief function.

Specifically, in the present embodiment, the first pressure relief slot 120 is located at the bottom of the boss 110. When the battery cell 200 experiences thermal runaway, the internal gas pressure of the battery cell 200 rises rapidly, causing the explosion-proof valve at its bottom to open and release gas. At this point, the strong impact force of the gas can rupture a top of the boss 110, allowing the gas to flow into the first pressure relief slot 120 at the bottom of the boss 110, thereby achieving the pressure relief function. Compared with the related art, the substrate 100 provided in this embodiment lacks pressure relief holes, thereby avoiding the problem that the pressure relief hole may be blocked by the bonding medium, and also eliminating the need for a sealing process and its related process operations, thereby further improving the assembly efficiency of the battery cell 200.

In addition, the bonding medium can flow smoothly in the channel 190 formed between the bottom of the battery cell 200 and the substrate 100. Specifically, the bonding medium can fully fill the gap in the channel 190 during the flowing process, and gradually cover until it is evenly distributed throughout the channel area, so that the bonding medium can be fully contacted with the battery cell 200 and the bracket, thereby enhancing the fixation stability of the battery cell 200.

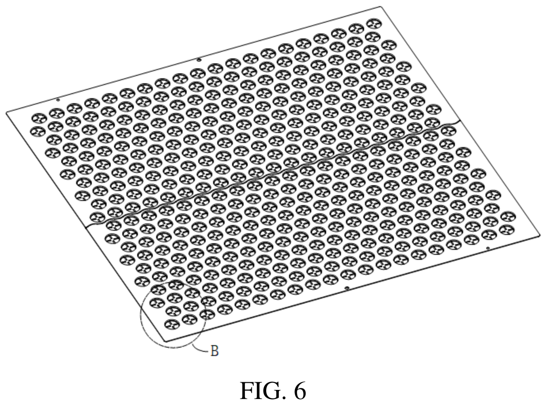

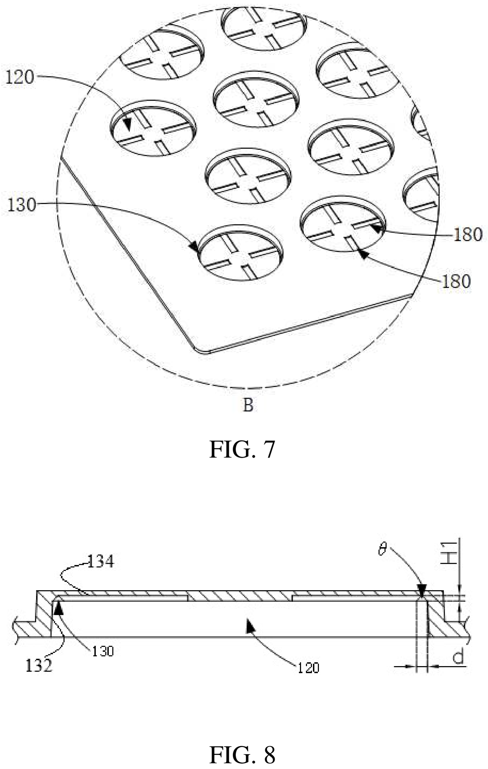

In some embodiments, please refer to FIG. 1, FIG. 6 and FIG. 7. FIG. 6 is a schematic structural view of the bracket in FIG. 1 from another viewing angle. FIG. 7 is an enlarged view of portion B in FIG. 6. The bottom wall of the boss 110 is provided with a first groove 130. The design of the first groove 130 can effectively reduce a thickness of the top of the boss, thereby reducing the structural strength of this position to a certain extent, so that the gas released when the battery cell 200 is in thermal runaway can more easily break through the top of the boss. This ensures that the gas discharged from the battery cell 200 can be released in a timely manner, avoids the continuous accumulation of internal pressure in the battery, and greatly reduces the risk of safety accidents caused by thermal runaway of the battery cell 200.

To ensure that the first groove 130 is more easily broken through by gas, in some embodiments, the first groove 130 is set to have a first inner wall 132 and a second inner wall 134 connected to each other, and the first inner wall 132 and the second inner wall 134 are connected between a top wall and an inner side wall of the first pressure relief slot 120. An angle *θ* between the first inner wall 132 and the second inner wall 134 is an acute angle.

Specifically, the angle *θ* between the first inner wall 132 and the second inner wall 134 is set to an acute angle, so that when the gas released from the battery cell 200 applies an impact force to the top of the boss 110, the stress can be concentrated at the position of the acute angle, thereby making the boss 110 easier to be broken through by the gas.

By setting the angle *θ* between the first inner wall 132 and the second inner wall 134 to an acute angle, this embodiment can significantly reduce the structural strength of the top of the boss 110 when the gas impacts the boss 110. Specifically, the acute angle design enables the stress on the top of the boss 110 to be concentrated at the acute angle position when the gas impacts the boss 110. This stress concentration phenomenon accelerates the deformation and rupture of the top of the boss, thereby making the structure of the boss 110 easier to be broken through by the gas, ensuring that the gas can be released more quickly in the case of thermal runaway of the battery cell 200, reducing the excessive accumulation of internal pressure in the battery, and ensuring the safety of the battery cell 200 to a greater extent.

In some embodiments, refer to FIG. 8, which is a schematic structural view of part of the bracket in FIG. 5, a depth H1 of the first groove 130 is designed to be in a range of 0.3 mm to 1.2 mm.

Specifically, it has been experimentally verified that, on the one hand, if the depth H1 of the first groove 130 is less than 0.3 mm, the insufficient depth H1 of the first groove 130 makes it impossible to effectively weaken the structural strength of the top of the boss, resulting in the inability to fully concentrate stress when the gas impacts the top of the boss when the battery cell 200 is in a thermal runaway state, and the inability to quickly break through the top of the boss, thereby failing to achieve the expected effect of accelerating the discharge of the internal gas of the battery cell 200 to the first pressure relief slot 120. In this case, the accumulation of gas and the increase in pressure may cause the battery to over-expand or rupture, greatly increasing the safety risk when the battery experiences thermal runaway.

On the other hand, if the depth H1 of the first groove 130 is greater than 1.2 mm, although the increase in the depth H1 of the first groove 130 makes the top of the boss 110 easier to be broken through when subjected to gas impact, this design also brings practical production problems. Due to the excessive depth H1 of the first groove 130, difficulties are caused in the mold injection molding process, especially in the injection molding process, the excessive depth H1 of the first groove 130 increases the difficulty of molding, resulting in the first groove 130 cannot be successfully formed. In addition, the first groove 130 with an excessively large depth H1 may cause a significant decrease in the structural strength of the top of the boss 110, which may further cause the boss 110 to be unable to withstand the weight of the battery cell 200 when supporting the battery cell 200, resulting in damage to the structure of the boss 110.

Therefore, by limiting the depth H1 of the first groove 130 to be in the range of 0.3 mm to 1.2 mm, it is possible to effectively avoid the adverse effects brought by too shallow or too deep design, and at the same time ensure the structural strength of the battery, it is possible to accelerate the gas release process efficiently and reliably, avoid excessive internal pressure accumulation, ensure that the battery can be safely depressurized in the case of thermal runaway, and reduce possible safety hazards.

In some embodiments, please refer to FIG. 8, an opening width d of the first groove 130 is designed to be in the range of 0.6 mm to 2.4 mm.

Specifically, it has been experimentally verified that, on the one hand, if the opening width d of the first groove 130 is less than 0.6 mm, the injection molding difficulty of the boss 110 is relatively high. In addition, if the groove opening is too small, the structural strength of the top of the boss cannot be effectively weakened. Since the main purpose of the design of the first groove 130 is to optimize the stress distribution of the battery structure, an excessively small opening may result in the structural strength not being sufficiently reduced, and the expected pressure relief effect cannot be achieved, thereby affecting the safety and performance of the battery.

On the other hand, if the opening width d of the first groove 130 is greater than 2.4 mm, it may have an adverse effect on the structural strength of the top of the boss. An excessively wide opening weakens the support structure at the top of the boss, resulting in a decrease in the overall strength of the boss 110. Specifically, an excessively wide opening causes a decrease in the area of the material that could originally provide support, thereby reducing the strength and stability of the boss 110 when subjected to external pressure. In practical applications, the boss 110 needs to bear the weight of the battery cell 200 and external pressure. If the support structure of the boss 110 is too weak, it may not be able to effectively support the weight of the battery cell 200, resulting in deformation or damage to the boss 110. This design defect makes the battery structure not strong enough, and in severe cases, it may cause the battery to fail during operation, increasing safety hazards.

Therefore, by designing the opening width d of the first groove 130 within the range of 0.6 mm to 2.4 mm, it is possible to effectively avoid the adverse effects brought by the excessively narrow or excessively wide opening. This structural design can not only ensure that the boss 110 is easier to be injection molded, but also effectively optimize the exhaust efficiency of the battery cell 200 under the premise of ensuring structural strength and safety.

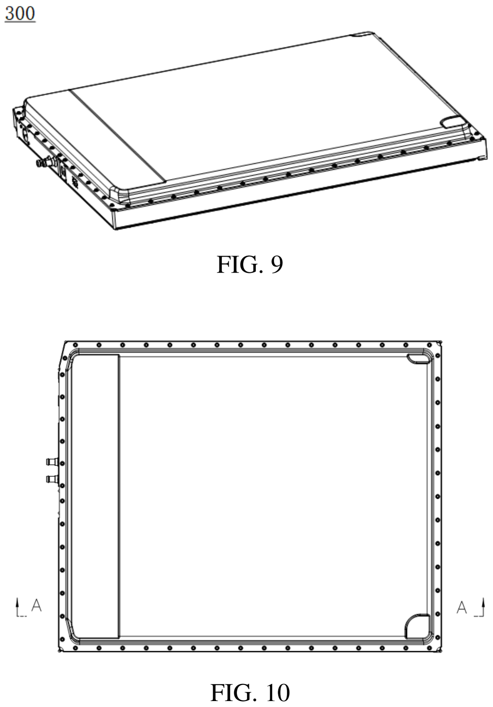

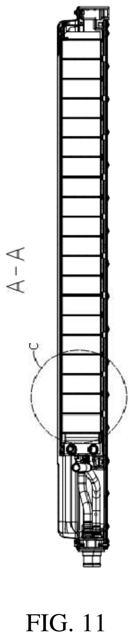

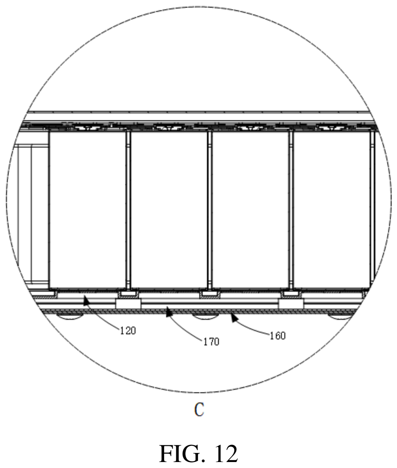

In some embodiments, please refer to FIGs. 9 to 12. FIG. 9 is a schematic structural view of a battery pack according to one embodiment of the present application. FIG. 10 is a top view of the battery pack in FIG. 9. FIG. 11 is a cross-sectional view of the battery pack in FIG. 10. FIG. 12 is an enlarged view of portion C in FIG. 11. The substrate 100 can cooperate with a bottom plate 160 of the battery case to jointly enclose a second pressure relief slot 170, and the second pressure relief slot 170 is designed to communicate with the first pressure relief slot 120. When the battery cell 200 experiences thermal runaway, the gas released by the battery cell 200 first enters the first pressure relief slot 120, and then the gas flows to the second pressure relief slot 170 communicating with the first pressure relief slot 120. The second pressure relief slot 170 can cooperate with other structures so that the gas located in the second pressure relief slot 170 can be guided to a designated position for collection or discharge, avoiding gas accumulation inside a battery case, and preventing excessive internal pressure or other safety hazards.

For example, an optimized design can include the connection of the second pressure relief slot 170 with a vent hole or a ventilation pipe of the external environment of the battery case to form an effective gas ventilation system. Through this design, the gas can be quickly discharged in the event of thermal runaway, reducing the increase in internal pressure of the battery case, thereby improving the safety and reliability of the battery system.

In this embodiment, the first pressure relief slot 120 and the second pressure relief slot 170 cooperate with each other to ensure the smooth flow of a gas discharge path, and effectively reduce the risk that may be brought by the gas accumulation in the battery case, thereby ensuring the safety and reliability of the battery system.

In some embodiments, please refer to FIG. 2 and FIG. 7, a top wall of the first pressure relief slot 120 is provided with a plurality of second grooves 180, and the second grooves 180 extend radially along the top wall and are arranged radially around a center of the top wall.

Specifically, the present embodiment is provided with multiple second grooves 180 to reduce the structural strength of the top of the boss. The second groove 180 reduces the thickness of the top of the boss to reduce the structural strength of the top of the boss. The second groove 180 can also cooperate with the first groove 130 to achieve the weakening of the structural strength of the top of the boss. The plurality of second grooves 180 are arranged radially around the center of the top wall. This positional arrangement can effectively optimize the structural strength of the battery case. When the battery cell 200 is in a normal working state, the distribution of the second grooves 180 helps to evenly distribute the pressure applied by the battery cell 200 on the boss 110, avoiding the occurrence of local stress concentration, thereby ensuring the stability of the boss 110, so that the boss 110 can meet the required structural strength requirements under regular conditions without thermal runaway.

In some embodiments, please refer to FIG. 5, an orthographic projection of the battery cell 200 on the plane where the top of the boss 110 is located exceeds an edge of the top of the boss 110. This design expands an effective contact area of the battery cell 200 beyond the edge of the boss 110, ensuring a larger contact area between the battery cell 200 and the bracket, so that the bonding medium in the channel 190 formed between the bottom of the battery cell and the substrate 100 has a larger contact area with the bottom of the battery cell 200, thereby making the connection between the battery cell 200 and the bracket stronger, which can effectively prevent the battery cell 200 from being displaced or loosened due to vibration, external force and other factors during use, ensuring the stability and reliability of the battery system.

From a structural point of view, this design not only enhances the fixing effect between the battery cell 200 and the bracket, but also improves the overall strength and compression resistance of the battery system by optimizing the structural layout. When the battery case is stressed, the increased contact area can evenly disperse the external force, avoid excessive local stress, and reduce deformation or damage caused by stress concentration. Therefore, the structural design of this embodiment effectively improves the overall fixing effect between the battery cell 200 and the bracket, ensures that the battery system can maintain stable operation under different working conditions, and reduces safety hazards.

In some embodiments, a wall thickness of a sidewall of the boss 110 is 1 mm to 5 mm, and/or a height of the boss 110 is 1 mm to 10 mm, and/or a wall thickness of the top of the boss 110 is 0.6 mm to 1.5 mm.

First, it has been verified by experiments that when the wall thickness of the sidewall of the boss 110 is less than 1 mm, the material fluidity is insufficient due to the excessively thin wall thickness, resulting in the injection molding process of the boss 110 becoming more difficult. When the wall thickness of the sidewall of the boss 110 is greater than 5 mm, the thicker wall thickness causes uneven cooling of the plastic during injection molding, resulting in excessive resistance to the plastic flow, excessive cooling time, and problems such as bubbles, uneven shrinkage, or deformation.

Therefore, in this embodiment, the wall thickness of the sidewall of the boss 110 is controlled to be between 1 mm and 5 mm, and this range can balance the difficulty of injection molding and the quality of the finished product. Within this wall thickness range, the injection molding process is relatively simple, which can ensure that the plastic material can smoothly flow into the mold and fill each area, avoid problems such as poor flow or uneven cooling, and at the same time ensure that the finished product has sufficient strength and stability.

Secondly, when the height of the boss 110 is less than 1 mm, the fluidity of the bonding medium in the channel 190 formed between the bottom of the battery cell 200 and the substrate 100 is significantly affected, resulting in the bonding medium not being able to flow smoothly and be evenly distributed, thereby causing the battery cell 200 to be poorly fixed on the bracket. On the other hand, when the height of the boss 110 is greater than 10 mm, the space occupied by the bracket is significantly increased. This not only increases the volume of the bracket itself, but may also lead to a decrease in the volume efficiency of the overall design, affecting the compactness and integrability of the device. Therefore, the height of the boss 110 is designed to be between 1 mm and 10 mm to ensure smooth fluidity of the bonding medium and optimal fixation of the battery cell 200 to the bracket, while also preventing the boss 110 from unnecessarily increasing space and weight.

When the wall thickness of the top of the boss is less than 0.6 mm, the injection molding process becomes more difficult. When the wall thickness of the top of the boss is greater than 1.5 mm, it may be difficult for the gas to break through the top of the boss due to the excessively thick wall thickness, so that the gas cannot be released in time, which is not conducive to the safety and reliability of the battery.

Therefore, the wall thickness of the top of the boss needs to be reasonably designed between 0.6 mm and 1.5 mm, so as to ensure a smooth injection molding process, avoid the molding difficulties brought by the excessively thin wall thickness, and avoid the gas release problems brought by the excessively thick wall thickness, thereby ensuring the safety of the battery cell 200.

The present application provides a bracket, which includes a substrate 100 and a plurality of bosses 110. The bosses 110 are provided on the substrate 100, a top of each boss 110 is configured to support a corresponding battery cell 200, so that a channel 190 is formed between the bottom of the battery cell 200 and the substrate 100, the channel 190 is used to accommodate a bonding medium to fix the battery cell 200 to the bracket, and the bottom of the boss 110 is provided with a first pressure relief slot 120. The first pressure relief slot 120 is designed to connect with the battery cell 200 during thermal runaway, effectively relieving internal pressure. Compared with the related technology, the substrate 100 provided in this application is not provided with a pressure relief hole, so there is no need to perform sealing processing and its related process operations, thereby further improving the assembly efficiency of the battery cell 200. In addition, the bonding medium can flow smoothly in the channel 190 formed between the bottom of the battery cell 200 and the substrate 100, and gradually cover until it is evenly distributed throughout the area of the channel 190, allowing the bonding medium to make full contact with the battery cell 200 and the bracket, thereby improving the stability of the fixation of the battery cell 200.

The present application also provides a battery pack 300. The battery pack 300 includes a bracket and has all the advantages of the bracket, which will not be repeated here.

This application also provides a power-consuming equipment, which can be, but is not limited to, a pure electric vehicle, a hybrid vehicle, and the like. The power-consuming equipment includes a battery pack 300, which has all the advantages of the battery pack 300, which will not be repeated here.

## Claims

1. A bracket, for installing a plurality of battery cells (200), **characterizing in** comprising:
a substrate (100),
wherein a side of the substrate (100) away from the battery cells (200) is provided with a plurality of grooves, and a side of the substrate (100) adjacent to the battery cells (200) is provided with a plurality of bosses (110) corresponding to the grooves respectively,
wherein a top of each of the bosses (110) is configured to support a corresponding one of the battery cells (200) to form a channel (190) between at least a portion of a bottom of the battery cell (200) and the substrate (100), the channel (190) is configured to accommodate a bonding medium to secure the battery cell (200) to the bracket; and
wherein a bottom of the boss (110) is provided with a first pressure relief slot (120) configured to communicate with the battery cell (200) when the battery cell (200) undergoes thermal runaway to relieve pressure of the battery cell (200).

2. The bracket according to claim 1, wherein a bottom wall of the boss (110) is provided with a first groove (130).

3. The bracket according to claim 2, wherein the first groove (130) has a first inner wall (132) and a second inner wall (134) connected to each other, and the first inner wall (132) and the second inner wall (134) are connected between a top wall and an inner side wall of the first pressure relief slot (120), and wherein an angle (*θ*) between the first inner wall (132) and the second inner wall (134) is an acute angle.

4. The bracket according to claim 2, wherein a depth of the first groove (130) is 0.3 mm to 1.2 mm.

5. The bracket according to claim 2, wherein a width of an opening of the first groove (130) is 0.6 mm to 2.4 mm.

6. The bracket according to any one of claims 1-5, wherein the substrate (100) is configured for being installed on a bottom plate of a battery case to form a second pressure relief slot (170) with the bottom plate, the second pressure relief slot (170) communicates with the first pressure relief slot (120).

7. The bracket according to any one of claims 1-5, wherein a top wall of the first pressure relief slot (120) is provided with a plurality of second grooves (180), and the second grooves (180) extend radially along the top wall of the first pressure relief slot (120) and are arranged radially around a center of the top wall of the first pressure relief slot (120).

8. The bracket according to any one of claims 1-5, wherein an orthographic projection of the battery cell (200) on a plane where the top of the boss (110) is located exceeds an edge of the top of the boss (110).

9. The bracket according to any one of claims 1-5, wherein a wall thickness of a sidewall of the boss (110) is 1 mm to 5 mm, and/or a height of the boss (110) is 1 mm to 10 mm, and/or a wall thickness of the top of the boss (110) is 0.6 mm to 1.5 mm.

10. A battery pack, comprising at least one battery cell (200) and the bracket according to any one of claims 1-9.

11. A power-consuming equipment, comprising the battery pack according to claim 10.

12. The power-consuming equipment according to claim 11, comprising a pure electric vehicle or a hybrid vehicle.
